(19) Europäisches Patentamt
European Patent Office
Office européen des brevets

(11) EP 2 585 542 B1

(12) **EUROPÄISCHE PATENTSCHRIFT**

(45) Veröffentlichungstag und Bekanntmachung des Hinweises auf die Patenterteilung:
**10.08.2016 Patentblatt 2016/32**

(21) Anmeldenummer: **11729948.7**

(22) Anmeldetag: **22.06.2011**

(51) Int Cl.:
***C09D 5/00*** *(2006.01)*

(86) Internationale Anmeldenummer:
**PCT/EP2011/060466**

(87) Internationale Veröffentlichungsnummer:
**WO 2011/161173 (29.12.2011 Gazette 2011/52)**

# (54) VERFAHREN ZUR HERSTELLUNG HYDROPHOBER OBERFLACHEN

METHOD FOR PRODUCING HYDROPHOBIC SURFACES

PROCÉDÉ DE FABRICATION DE SURFACES HYDROPHOBES

(84) Benannte Vertragsstaaten:
**AT BE CH DE ES FI FR GB HU IT LI NL NO PL SE TR**

(30) Priorität: **22.06.2010 DE 102010024559**

(43) Veröffentlichungstag der Anmeldung:
**01.05.2013 Patentblatt 2013/18**

(73) Patentinhaber: **Clariant International Ltd.**
**4132 Muttenz (CH)**

(72) Erfinder:
- **SOHLING, Ulrich**
  **85356 Freising (DE)**
- **KRÖHNKE, Christoph**
  **81377 München (DE)**
- **THIE, Gordon**
  **45527 Hattingen (DE)**
- **KUHN, Hubert**
  **42697 Solingen (DE)**

(74) Vertreter: **Hütter, Klaus**
**Clariant Produkte (Deutschland) GmbH**
**Patent Management**
**Industriepark Höchst, G 860**
**65926 Frankfurt am Main (DE)**

(56) Entgegenhaltungen:
**WO-A1-2005/071023**
**WO-A1-2009/040596**
**WO-A1-2010/139586**

EP 2 585 542 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zu Herstellung hydrophober Oberflächen sowie eine hydrophobe Oberfläche, wie sie nach dem erfindungsgemäßen Verfahren hergestellt werden kann.

Für unterschiedlichste Anwendungen in der Technik bzw. im Alltagsgebrauch ist es wünschenswert, beliebige Oberflächen mit extrem hydrophoben bzw. Schmutz abweisenden Eigenschaften zu versehen. Zur Bestimmung der Oberflächeneigenschaften setzt man hierbei insbesondere die Messung des Kontaktwinkels eines Wassertropfens auf der Oberfläche ein, wie sie z. B. in Physical Chemistry of Surfaces, Chapter X, A. W. Adamson, A. P. Gast, John Wiley & Sons, Inc., 1997, beschrieben ist.

Oberflächen werden als hydrophil bezeichnet, wenn der Kontaktwinkel < 90° ist, Oberflächen mit einem Kontaktwinkel > 90° werden als hydrophob bezeichnet. Ein Kontaktwinkel von 180° bedeutet vollkommene Unbenetzbarkeit, ein Kontaktwinkel von 0° bedeutet hingegen vollständige Benetzung. Beide Grenzfälle kommen in der Natur jedoch nicht vor. Der Zusammenhang zwischen Kontaktwinkel $\alpha$ und den Grenzflächenspannungen zwischen Wasser und Luft ($\sigma_{IV}$), Festkörper und Wasser ($\sigma_{SL}$) sowie Festkörper und Luft ($\sigma_{SV}$) beschreibt die Youngsche Gleichung:

$$\sigma_{SV} - \sigma_{SL} = \sigma_{LV} \cdot \cos\alpha$$

Je niedriger die Grenzflächenspannung $\sigma_{SV}$, desto unbenetzbarer ist die Oberfläche.

Betrachtet man den einfachsten Fall einer planaren d. h. glatten Oberfläche, so wird der Kontaktwinkel des Wassertropfens auf der Oberfläche durch die Auswahl des Materials bestimmt (siehe Adamson, S. 365). Misst man z. B. den Kontaktwinkel auf Paraffin, so findet man üblicherweise Kontaktwerte von 110°. Polyethylen zeigt einen Kontaktwinkel für Wasser von 103°.

Noch ausgeprägtere hydrophobe Eigenschaften werden angetroffen, wenn man zu perfluorierten Verbindungen übergeht. So findet man auf PTFE (Polytetrafluorethylen) für Wasser 112°. Zwar werden perfluorierte Verbindungen zur Hydrophobierung von Oberflächen in der Technik, wie z. B. auch in der Textilbehandlung, eingesetzt, nachteilig sind jedoch zum einen die hohen Kosten, zum zweiten die oftmals schlechte Verarbeitbarkeit und zum Dritten die mangelnde Umweltverträglichkeit der Ausgangskomponenten, die auch in das Abwasser und in die Mülldeponien gelangen können.

Noch höhere Kontaktwinkel (» 110 °) lassen sich dadurch erzielen, dass man eine mikrostrukturierte, hydrophobe Oberfläche einsetzt. Man spricht dann von sog. Superhydrophobie. Solche Systeme finden sich in der Natur beispielsweise auf den Blättern der Lotuspflanze. Deshalb hat sich der Begriff des Lotuseffektes eingebürgert, der ab einem Kontaktwinkel $\alpha$ von etwa 130° auftritt. Dieser Effekt wird bei der Lotuspflanze dadurch verursacht, dass sich 10 bis 20 $\mu$m hohe und 10 bis 15 $\mu$m voneinander entfernte Stäbchen, sog. Papillen, auf der Blattoberfläche befinden, auf der außerdem noch Wachse aufgelagert sind. Durch die Mikrostruktur hat das Wasser nicht mehr die Möglichkeit, in die Zwischenräume der Blattoberfläche zu gelangen, wodurch die Kontaktfläche zwischen Wasser und Oberfläche drastisch verringert wird. So befinden sich etwa nur 2 - 3 % der Tropfenoberfläche mit der Oberfläche in Kontakt, die dadurch eine außerordentlich niedrige Benetzbarkeit aufweist. In extremen Fällen wird sogar nur eine Auflagefläche von etwa 0,6 % erzielt. Durch diese geringe Adhäsion zwischen Blattoberfläche und Wassertropfen kann das Wasser leicht abperlen, und aufliegende Schmutzpartikel, die ebenfalls nur eine kleine Kontaktfläche besitzen, werden dadurch mitgerissen und weggespült. Man spricht deshalb auch von einer sog. selbstreinigenden Oberfläche. Bei Pflanzen liegt der Nutzen dieses Effektes darin, dass die Pflanze vor einer Besiedlung durch Mikroorganismen, Krankheitserreger und Keime, wie z. B. Pilzspuren, oder dem Bewuchs von Algen geschützt wird. Ähnliche Oberflächen finden sich auch bei Tieren, wie z. B. Schmetterlingen und Libellen an Stellen, an die sie mit ihren Beinen zur Säuberung nicht hingelangen können.

Nach der detaillierten Aufklärung des sog. Lotuseffektes gab es viele Untersuchungen, auch mit künstlichen Systemen, eine superhydrophobe Oberfläche einzustellen und diese für technische Anwendungen zum Einsatz zu bringen. So ist ein selbstreinigender Fassadenanstrich kommerziell erhältlich, die unter dem Warennamen Lotusan® vertrieben wird und mit der Gebäude angestrichen werden können. Ein aktueller Übersichtsartikel über superhydrophobe Oberflächen findet sich in R. Frenzel et al. Ultrahydrophobe Oberflächen durch gezieltes Grenzflächendesign, Chemie Ingenieur Technik 2010, 82 Nr. 3, 297-308. Die meisten bisher bekannten Systeme bestehen aus einer Kombination von hydrophoben Partikeln und einer Matrix aus einem hydrophoben Polymer oder einer hydrophoben Verbindung. Dieser Aufbau soll es ermöglichen, mit einer Beschichtungsformulierung eine Vielzahl von Oberflächen zu modifizieren. Alternativ dazu können superhydrophobe Oberflächen auf speziellen Substraten auch dadurch hergestellt werden, indem zunächst die gewünschte Rauhigkeit eingestellt wird, die für eine spätere Erzielung der Superhydrophobie erforderlich ist und dann die Oberfläche durch eine Beschichtung nur noch hydrophob modifiziert wird. Dabei muss darauf geachtet werden, dass man mit solchen Beschichtungen arbeitet, mit denen die vorher eingestellte Oberflächen-rauhigkeit nicht verändert. Im Extremfall reichen hier Oberflächenbeschichtungen mit Monolagen von hydrophoben Verbindungen.

Beispiele für solche superhydrophobe Oberflächen, bei denen zunächst eine maßgeschneiderte Oberflächenrauhigkeit eingestellt wird und dann hydrophob beschichtet wird, stellen Oberflächen von anodisch oxidiertem Aluminium dar, die mit Alkylphosphonaten belegt sind sowie modifizierte plasmageätzte PTFE Oberflächen (siehe hierzu auch R. Frenzel et al. Ultrahydrophobe Oberflächen durch gezieltes Grenzflächendesign, Chemie Ingenieur Technik 2010, 82 Nr. 3, 297-308).

Das Patent WO 96074123 von Wilhelm Barthlott beschreibt selbstreinigende Oberflächen von Gegenständen sowie Verfahren zur Herstellung derselben. Es werden selbstreinigende Oberflächen von Gegenständen geschützt, die eine künstliche Oberflächenstruktur aus Erhebungen und Vertiefungen aufweisen, wobei der Abstand zwischen den Erhebungen im Bereich von 5 - 20 µm und die Höhe der Erhebung im Bereich von 5 - 100 µm liegen. Mindestens die Erhebungen, wenn nicht das ganze System, bestehen aus hydrophobem Polymer oder haltbar hydrophobierten Materialien, und die Erhebungen sind nicht durch Wasser oder durch Wasser, welches Detergentien enthält, ablösbar. Dieses Patent von Wilhelm Barthlott, des Entdeckers des Selbstreinigungs-Effektes superhydrophober mikro- und nanostrukturierter Oberflächen, nimmt erstmalig zum Lotus-Effekt Bezug und beansprucht allgemein superhydrophobe Oberflächen, die durch mikrostrukturierte System eingestellt werden.

Das Patent EP 0933388 beschreibt strukturierte Oberflächen mit hydrophoben Eigenschaften. Die erfindungsgemäßen Oberflächen weisen mit Wasser große Randwinkel auf, werden von Wasser nur schwer benetzt und besitzen daher einen Selbstreinigungseffekt. Weiterhin sind Verfahren zur Herstellung der strukturierten Oberflächen und deren Verwendung Gegenstand dieser Erfindung. In den Ansprüchen wird auf bestimmte Aspektverhältnisse eingegangen, d. h. auf das Verhältnis von Strukturbreite zu Strukturhöhe. Insbesondere sind in Anspruch 1 strukturierte Oberflächen beansprucht, die dadurch gekennzeichnet sind, dass sie Erhebungen mit einer mittleren Höhe von 50 nm - 10 µm und einen mittleren Abstand von 50 nm - 10 µm sowie Oberflächenenergien des unstrukturierten Materials von 10 - 20 mN/m aufweisen. Insbesondere sind in dieser Erfindung mikrostrukturierte Polymere beschrieben, die durch einen Gießprozess hergestellt werden und dadurch ihre Mikrostrukturierung erhalten. In einem zweiten Schritt werden sie hydrophobiert.

Das Patent CH 268258 beschreibt ein Verfahren, bei dem durch Aufbringen von Pulvern, wie Kaolin, Talk, Ton oder Silicagel, strukturierte Oberflächen erzeugt werden. Die Pulver werden durch Öle und Harze auf der Basis von Organosilicium Verbindungen auf der Oberfläche fixiert. Die Verwendung anderer Materialien wie Wachse oder Polyethylen oder Polypropylen, die als Matrix für die Schmutz abweisenden Partikel und die mikrostrukturierten Systeme dienen könnten, sind hier nicht beschrieben.

Das Patent EP 0909747 beschreibt ein Verfahren zur Erzeugung einer Selbstreinigungs-Eigenschaft von Oberflächen, wobei es sich bei den Oberflächen um solche insbesondere von Dachziegeln handelt. Die Oberfläche weist hydrophobe Erhebungen mit einer Höhe von 5 - 200 µm in verteilter Form auf. Zur Erzeugung dieser Erhebungen wird eine Oberfläche mit einer Dispersion von Pulverpartikeln aus Inertmaterial in einer Siloxanlösung benetzt und das Siloxan anschließend ausgehärtet. Die Pulverpartikel stellen vorzugsweise ein keramisches Material dar.

Das Patent WO 0058410 beschreibt ein Verfahren zur Herstellung von selbstreinigenden, ablösbaren Oberflächen, die Erhebungen und Vertiefungen aufweisen, wobei der Abstand zwischen den Erhebungen im Bereich von 0,1 - 200 µm und die Höhe der Erhebungen im Bereich von 0,1 - 100 µm liegen. Die Herstellung dieser Oberflächen erfolgt, indem eine Lösung, Dispersion oder Emulsion, die ein hydrophobes Material enthält, das beim Verdampfen des Lösemittels selbstorganisierend eine selbstreinigende Oberfläche bildet, aufgetragen und anschließend getrocknet wird. Das aufgetragene Material ist mit Detergentien ablösbar.

Die Offenlegungsschrift DE 10/2005 052404 A1 von Firma Goldschmidt GmbH beschreibt ein Verfahren zur Herstellung von ablösbaren, biostatischen, flächigen Beschichtungen auf unterschiedlichen Gegenständen, wobei bei der Beschichtung hydrophobe Partikel auf die Oberfläche der Gegenstände aufgebracht werden und so eine Oberflächenstruktur mit Erhebungen auf der Oberfläche der Gegenstände erzeugt wird. Die Schicht besteht aus hydrophoben Partikeln, die in einem leicht flüchtigen Siloxan eingelagert sind, welches ggfs. ein darin gelöstes Siliconwachs enthält. Die Ausgangsformulierung wird als Suspension auf die Oberflächen aufgebracht. Anschließend wird das leichtflüchtige Siloxan entfernt. So wird beispielsweise ein Siloxanwachs mit einem Molekulargewicht von 13000 g/mol und einem Rekristallisationspunkt von < 5 °C in Decamethylcyclopentasiloxan gelöst. Anschließend wird unter intensivem Rühren hydrophobierte, pyrogene Kieselsäure mit einer BET-Oberfläche von 220 $m^2/g$ (Aerosil® R 812 S von Evonik Degussa) zugegeben. Diese Formulierungen werden auf feste Oberflächen aufgesprüht, und die Bildung von mikrobiellen Verunreinigungen wird als Funktion der Zeit verfolgt, wobei mit der in diesem Patent angeführten Beschichtung eine deutlich geringere Besiedlung mit Mikroorganismen gefunden wurde.

Die WO 2009/040596 offenbart eine flüssige Zusammensetzung zur Reinigung harter Oberflächen, die als Bestandteile einen zumindest zum Teil wässrigen Träger, ein oder mehrere Tenside und eine effektive Menge einer bestimmten Verbindung gemäß der Formel I umfasst.

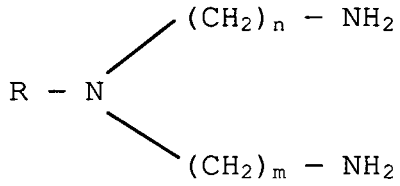

(I)

Weiterhin wird eine flüssige Zusammensetzung zur Beschichtung von Substraten mit einem hydrophoben Film beschrieben, die als Bestandteile einen flüssigen Träger und eine effektive Menge der Verbindung der Formel I umfassen. Schließlich ist auch ein hydrophober Beschichtungsfilm umfassend eine Verbindung der Formel I zur zumindest teilweisen Beschichtung eines Substrats offenbart. Sofern es sich um eine flüssige Zusammensetzung zur Reinigung harter Oberflächen handelt, werden als weitere Bestandteile "anorganische Partikel" angegeben. Geeignete anorganische Partikel sind ausgewählt aus der Gruppe der Phosphate, Oxide, Silikate, Carbonate, Hydroxide und Mischungen davon.

Die WO 2005/071023 betrifft eine Coating-Zusammensetzung auf Wasserbasis, die neben einem organischen Bindemittel ein "stain blocking agent" umfasst, bei dem es sich um mindestens eine Art von anorganischem Nanopartikel mit einer Schichtstruktur und einer kristallinen Struktur mit positiv geladenen Schichten handelt. Die genannten Nanopartikel sind bevorzugt aus anionischen Tonen und Salzen von Schichtdoppelhydroxiden ausgewählt. Weiterhin ist ein Verfahren zur Beschichtung von speziellen Substraten offenbart, bei dem die beschriebene Zusammensetzung eingesetzt wird. Zusätzlich können hierbei auch kationische Tone als Nanopartikel verwendet werden.

Die WO 2010/139586 betrifft eine wässrige Coating-Zusammensetzung, die zwischen 10 bis 50 Gew.-% eines mit Wasser mischbaren und hydrophoben Polyesterharzes, zwischen 50 und 90 Gew.-% eines Metallsalzes einer Fettsäure und eine Base in einer Menge von 70 bis 130 % der Anzahl der Carboxylgruppen des Harzes enthält. Die Zusammensetzung kann desweiteren Talg oder ein anderes kationisch geladenes Mineral wie Hydrotalcit in einer Menge zwischen 10 bis 45 Gew.-% bezogen auf das Metallsalz der Fettsäure enthalten. Schließlich wird auch ein Substrat offenbart, das mit der beschriebenen Zusammensetzung beschichtet ist.

Zwar ist schon eine Reihe von Formulierungen zur Herstellung von Schmutz abweisenden, hydrophoben und superhydrophoben Beschichtungen bekannt, es besteht jedoch ständig Bedarf nach Verbesserung.

Verbesserungen sind insbesondere im Hinblick auf die Umweltverträglichkeit der Beschichtungen, andererseits auch im Hinblick auf eine Vereinfachung des Herstellungsverfahrens und schließlich auf die beständige Haftung auf unterschiedlichsten Substraten notwendig. So hat beispielsweise die Formulierung auf der Basis von Silicon und hydrophoben Silica-Partikeln den Nachteil, dass solche hydrophoben, flammpyrolytisch hergestellten Silica-Partikel sphärisch sind und deswegen nur begrenzt auf planaren Substraten haften. Solche Beschichtungen werden schon bei relativ geringer mechanischer Belastung wieder entfernt. Gleichzeitig sind Beschichtungen unter Verwendung von Siliconen gesundheitlich und damit auch unter Umweltaspekten nicht unbedenklich. Ein Beispiel hierfür ist beschrieben in "Adhesion and friction studies of silicon surfaces processed_using a microparticle-based method", Autoren Yilei Zhang and Sriram Sundararajan, Tribology Letters, Vol. 23, No. 1, July 2006.

Überraschenderweise wurde nun gefunden, dass Schichtdoppelhydroxide besonders gut zur Herstellung von hydrophoben und superhydrophoben, d. h. Schmutz abweisenden, Beschichtungen geeignet sind. Schichtdoppelhydroxide werden üblicherweise in einem technisch vollständig unterschiedlichen Gebiet, nämlich als Absorbentien bei der Verarbeitung von PVC eingesetzt.

Die vorliegende Erfindung betrifft daher in einem ersten Aspekt ein Verfahren zur Herstellung einer hydrophoben Oberfläche umfassend die Schritte:

- Herstellen einer Zusammensetzung enthaltend mindestens ein Schichtdoppelhydroxid;
- Aufbringen der Zusammensetzung auf eine Oberfläche

wobei das mindestens eine Schichtdoppelhydroxid mit mindestens einer hydrophoben Beschichtung versehen ist, und wobei die hydrophobe Oberfläche einen Kontaktwinkel von 100 bis 175° aufweist.

Bei der Zusammensetzung enthaltend das mindestens eine Schichtdoppelhydroxid handelt es sich im Rahmen der vorliegenden Erfindung bevorzugt um eine Dispersion, eine Matrix, insbesondere eine polymere Matrix oder eine ein Wachs umfassende Matrix, oder einen Lack.

Sofern es sich bei der Zusammensetzung um eine Dispersion handelt, sind im Rahmen der vorliegenden Erfindung Dispersionen umfassend Wasser, Alkohole (bevorzugt Ethanol), Ketone wie Aceton und deren Mischungen bevorzugt. Daneben können auch andere Lösemittel, wie beispielsweise aliphatische und aromatische Lösemittel, sowie Lösemittelgemische verwendet werden. Diese sollten leicht verdampfbar sein. Ein Beispiel hierfür ist Stoddard-Solvent (White Spirit). Ebenfalls möglich sind überkritisches Kohlendioxid und umweltverträgliche ionische Flüssigkeiten.

Insgesamt bevorzugt sind Lösemittel mit Siedepunkten von maximal 100 °C, bevorzugter maximal 95 °C, weiter

bevorzugt maximal 90 °C, insbesondere bevorzugt maximal 80 °C, ebenfalls bevorzugt maximal 70 °C, bevorzugter maximal 65 °C und am meisten bevorzugt maximal 60 °C.

Sofern es sich bei der Zusammensetzung um eine polymere Matrix handelt, wird das Polymer im Rahmen der vorliegenden Erfindung bevorzugt aus der Gruppe bestehend aus thermoplastischen Polymeren wie Polyolefinen, bevorzugt aus polaren thermoplastischen Polymeren wie beispielsweise Acrylester-Styrol-Acrylnitril (ASA), Acrylnitril-Butadien-Styrol (ABS), Casein-Kunststoffe, Celluloseacetat, Flüssigkristall-Polymere (LCP), ‚High Impact' Polystyrol (HIPS), Cellulosehydrat, Cellulosenitrat, Cyclo-Olefin-Copolymere (COC), Perfluoralkoxylalkan, Polyamide (PA), Polyester wie Polyethylenterephthalat (PET), Polybutyleneterephthalat (PBT), Polymethyleneterephthalat, Polycarbonat (PC), Polyetherblockamid (PEBA), Polyetherimid (PEI), Polyetherketone (PEK, PEEK), Polyethersulfon (PES), Polyhydroxybutyrat(PHB), Polyimid (PI), Polylactid (PLA), Polymethacrylmethylimid (PMMI), Polymethylmethacrylat (PMMA), Polyoxymethylen (POM), Polyacetal, Polyphenylenether (PPO), Polyphenylensulfid (PPS), Polyphthalamid, Polystyrol(e), Polysulfon, Polyvinylacetal (PVAc), Polyvinylchlorid(e) (PVC), Polyvinylidenfluorid, Styrol-Acrylnitril (SAN), thermoplastischer Stärke oder thermoplastischem Polyurethan (TPU, TPE) ausgewählt. Ebenso bevorzugt sind Copolymere, die Comonomereinheiten der genannten thermoplastischen Polymere enthalten.

Besonders bevorzugt sind Oligomere bzw. niedermolekulare Fraktionen der genannten thermoplastischen Polymere, die neben einem niedrigeren Molekulargewicht ($M_w$ = 1000 - 20000, bevorzugt 1500 - 15000, ganz besonders bevorzugt 2000-12000) auch niedrigere Schmelzbereiche bzw. Erweichungstemperaturen bzw. Tropfbereiche aufweisen. Hierzu zählen Polyethylen-Wachse wie beispielsweise das kommerziell erhältliche Luwax A (Hersteller BASF)(Schmelzbereich / DSC 101-109°C (DIN 51007; ASTM D 3418)); Tropfbereich / Ubelohde 107-114°C (DIN 51801; ASTM D-3954) sowie die Polyethylen (PE)- und Polypropylen (PP)-wachse der Licocen-Reihe (Hersteller Clariant) mit Schmelzbereichen - je nach Typ- von 70°C bis 140°C und Tropfbereichen von 75°C bis 145°C. Geeignet sind aber auch oxidierte und teiloxidierte Wachse sowie Gemische von Estern langkettiger Carbonsäuren wie Produkten natürlichen Ursprungs, etwa jenen, die unter dem Namen Montanwachse bekannt sind.

Schließlich kann eine Einbettung auch in entsprechende Vorstufen erfolgen. Hierzu werden die Schichtdoppelhydroxide in Präkursoren eingebracht, z.B. Monomere, die mittels thermischer oder photochemischer Initiation auf den Träger polymerisiert werden.

Sofern es sich bei der Zusammensetzung um eine Wachs enthaltende Matrix handelt, wird das Wachs im Rahmen der vorliegenden Erfindung bevorzugt aus der Gruppe bestehend aus unoxidierten, oxidierten oder teiloxidierten Paraffinwachsen, Montanwachsen, Carnaubawachs, Bienenwachs, Amid-Wachsen und deren Mischungen ausgewählt.

Auch Fettsäuren, langkettige Ketone, Aldehyde und Amide sowie langkettige Kohlenwasserstoffe (mehr als 12 Kohlenstoffatome) mit einer Kombination der genannten polaren Funktionen sowie Mischungen derselben können im Rahmen der vorliegenden Erfindung geeignete Matrices darstellen. Ebenfalls möglich sind Sorbitanfettsäureester wie beispielsweise Sorbitan Tristearat (kommerziell erhältlich unter dem Handelsnamen "Span 65").

Desweiteren werden Mischungen der genannten thermoplastischen Polymere einschließlich aller Polyolefine mit Wachsen inkl. unfunktionalisierten Paraffinwachsen und/oder langkettigen Kohlenwasserstoffen beansprucht. Der Wachsanteil liegt gemeinhin zwischen 1 und 25 Gew.%, bevorzugt zwischen 2 und 15 Gew.-%, besonders bevorzugt zwischen 3 und 10_Gew.-%.

Bei der Zusammensetzung kann es sich im Rahmen der vorliegenden Erfindung auch um einen Lack handelt. Unter dem Begriff "Lack" wird im Rahmen der vorliegenden Erfindung jede Zusammensetzung verstanden, die mindestens ein Pigment und mindestens ein Lösungsmittel umfasst. Bevorzugte Lacke umfassen zudem mindestens ein Bindemittel, mindestens einen Füllstoff und/oder mindestens ein Additiv.

Im Rahmen der vorliegenden Erfindung bevorzugte Schichtdoppelhydroxide werden bevorzugt aus der Gruppe bestehend aus der Verbindungsklasse der Hydrotalcite ausgewählt. Sofern es sich bei dem Schichtdoppelhydroxid um einen Hydrotalcit handelt, wird dieser bevorzugt aus der Gruppe bestehend aus $[Mg_xAl(OH)_{2x+2}]+[0.5CO_3*nH_2O]$ (mit x=2, x=3) wie Hydrotalcit, Manasseit, $[Mg_xFe(OH)_{2x+2}]+[0.5CO_3*nH_2O]$ (mit x=3) wie Pyroaurit, Sjörgrenit, $[Mg_xCr(OH)_{2x+2}]+[0.5CO_3*nH_2O]$ (mit x=3) wie Stichtit, Barbertonit, $[Mg_xMn(OH)_{2x+2}]+[0.5C03*nH_2O]$ (mit x=3) wie Dessautelsit, $[Mg_xFe(OH)_{2x+2]}+[OH*2H_2O]$ (mit x=3) wie Meixenit und $[Ni_xAl(OH)_{2x+2}]+[0.5CO_3/OH*4H_2O]$ wie Takovit ausgewählt. Es ist im Rahmen der vorliegenden Erfindung auch möglich, Mischungen aus zwei oder mehr Schichtdoppelhydroxiden einzusetzen, bevorzugt Mischungen aus zwei oder mehr Hydrotalciten. Besonders bevorzugt sind im Rahmen der vorliegenden Erfindung Hydrotalcite, wobei es sich grundsätzlich um natürliche oder synthetische Hydrotalcite oder auch um Verbindungen mit einer Hydrotalcit-ähnlichen Struktur und deren Mischungen handeln kann. Diese werden besonders bevorzugt in einer Zusammensetzung enthaltend 7-15 % Al, 10-28 % Mg und ggfs. 5-15 % Zn eingesetzt, wobei Aluminium-Magnesium-Hydroxycarbonat enthaltend 9-12 % Al und 20-24 % Mg sowie Aluminium-Magnesium-Zink-Hydroxycarbonat enthaltend 8-13 % Al, 12-18 % Mg und 9-13 % Zn besonders bevorzugt sind. Diese besonders bevorzugten Hydrotalcite werden auch unter den Handelsnamen "SORBACID® 911" bzw. "SORBACID® 944" von der Firma Süd-Chemie AG vertrieben. Ein Schichtdoppelhydroxid, das für das Verfahren der vorliegenden Erfindung besonders gut geeignet ist, lässt sich desweiteren über eine BET Oberfläche von weniger als 20 $m^2/g$, bevorzugt weniger als 15 $m^2/g$, besonders bevorzugt weniger als 12 $m^2/g$ und am meisten bevorzugt weniger als 10 $m^2/g$ charakterisieren.

Weiter bevorzugt besitzt ein Schichtdoppelhydroxid, das für das Verfahren der vorliegenden Erfindung besonders gut geeignet ist, in einer 5%igen Suspension von Ethanol einen pH Wert von 5,5-10, bevorzugter von 7 bis 9,5. Ebenfalls bevorzugt besitzt ein Schichtdoppelhydroxid, das für das Verfahren der vorliegenden Erfindung besonders gut geeignet ist, einen Feuchtigkeitsgehalt von 0,05 bis 0,75 %, bevorzugter von 0,25 bis 0,55 % und am meisten bevorzugt von 0,5 %. Weiter bevorzugt weisen Schichtdoppelhydroxide, wie sie für das Verfahren der vorliegenden Erfindung besonders geeignet sind, eine Partikelgrößenverteilung, gemessen mit dynamischer Lichtstreuung, von D50 0,01 $\mu$m bis 2 $\mu$m, bevorzugt 0,1 $\mu$m bis 1,5 $\mu$m und am meisten bevorzugt von 0,75 $\mu$m bis 1 $\mu$m und D90 1 $\mu$m bis 20 $\mu$m, bevorzugt 2,5 $\mu$m bis 15 $\mu$m und am meisten bevorzugt von 5 $\mu$m bis 10 $\mu$m auf.

Bei den im Verfahren der vorliegenden Erfindung eingesetzten Schichtdoppelhydroxiden handelt es sich bevorzugt um Partikel mit einer Primärstruktur in Form einer Plättchenstruktur. Die Begriffe "Plättchenstruktur" und "plättchenförmige Struktur" werden im Rahmen der vorliegenden Anmeldung synonym verwendet.

Liegen die im Verfahren der vorliegenden Erfindung eingesetzten Schichtdoppelhydroxide in Form einer "Plättchenstruktur" vor, so haftet die Zusammensetzung besonders gut auf der zu beschichtenden Oberfläche. Zudem ergibt sich eine besonders haltbare und langzeitstabile Beschichtung.

Unter dem Begriff "Plättchenstruktur" wird im Rahmen der vorliegenden Erfindung jede dreidimensionale Struktur verstanden, bei der die erste und ggfs. die zweite Raumrichtung ein Vielfaches der dritten Raumrichtung betragen. Wendet man diese Definition auf die Struktur eines Quaders an, so würde der Quader eine Plättchenstruktur gemäß der vorliegenden Anmeldung besitzen, wenn die Länge ein Vielfaches der Höhe beträgt und die Breite des Quaders zwischen der Höhe und der Länge gewählt ist bzw. die Breite maximal der Länge des Quaders entspricht.

Die Schichtdoppelhydroxide, die gemäß der vorliegenden Erfindung bevorzugt sind und die eine Plättchenstruktur aufweisen, sind jedoch nicht auf eine Quaderform oder quaderähnliche Form beschränkt. Es kann sich vielmehr um jede dreidimensionale Struktur handeln, die die vorstehend angegebene Maßgabe erfüllt, nämlich dass eine oder zwei Raumrichtungen ein Vielfaches der dritten Raumrichtung betragen. Handelt es sich bei der dreidimensionalen Struktur um eine Struktur, die keine exakte Abmessung der Länge, Breite und Höhe erlaubt, so ist von der jeweils mittleren Länge, Breite und Höhe auszugehen. Handelt es sich bei der dreidimensionalen Struktur um eine Struktur, die keine definierte Länge und Breite besitzt - beispielsweise tablettenförmige Strukturen - so ist das Kriterium der "Plättchenstruktur" im Sinne der vorliegenden Erfindung ebenfalls erfüllt, wenn der mittlere Durchmesser der durch eine erste und zweite Raumrichtung gebildeten Ebene ein Vielfaches der Höhe der dreidimensionalen Struktur beträgt. Grundsätzlich kann diese durch die erste und zweite Raumrichtung gebildete Ebene jede beliebige Kontur aufweisen. Diese Ebene muss im Sinne der vorliegenden Erfindung auch nicht allein durch zwei Raumachsen definiert sein, es ist vielmehr ebenfalls möglich, dass diese Ebene durch drei oder mehrere Raumachsen definiert ist und eine einfach- oder mehrfach gewellte Struktur mit und ohne konkave und/oder konvexe Abschnitte umfasst.

Das Kriterium der "Plättchenstruktur" ist gemäß der vorliegenden Erfindung ebenfalls durch jede dreidimensionale Struktur erfüllt, die - sofern diese so in eine Quaderstruktur eingebracht wird, dass jede Seite des Quaders die Struktur an einem einzigen Punkt tangiert - die folgende Definition erfüllt:

> Die Länge L (entspricht der längsten Seitenlänge) des sich ergebenden Quaders muss mindestens das Doppelte der Höhe H (entspricht der kürzesten Seitenlänge) des sich ergebenden Quaders betragen, bevorzugt das Doppelte bis Tausendfache, weiter bevorzugt das Zehnfache bis Hundertfache.

Die plättchenförmigen Strukturen der vorliegenden Erfindung sind bevorzugt Strukturen, die vollständig durch das Schichtdoppelhydroxid ausgefüllt sind. In weiteren Ausführungsformen können die plättchenförmigen Strukturen der vorliegenden Erfindung jedoch auch durch Poren oder lochartige Strukturen mit Dimensionen < 1,0$\mu$m durchbrochen sein. Grundsätzlich ist es im Rahmen der vorliegenden Erfindung jedoch erforderlich, dass die dreidimensionale plättchenförmige Struktur zu zumindest 20 Vol.-% durch das Doppelschichthydroxid ausgefüllt ist, bevorzugt 30 Vol.-%, weiter bevorzugt 50 Vol.-%, ebenfalls bevorzugt 60 Vol.-%, bevorzugter 75 Vol.-%, noch bevorzugter 90 Vol.-% und am meisten bevorzugt 99 bis 100 Vol.-%.

Beispiele für plättchenförmige Strukturen gemäß der vorliegenden Erfindung sind Strukturen in Schuppen-, Muschel-, Blatt-, Tabletten- oder Ziegelform oder auch Strukturen in Form von Cornflakes. Bevorzugt sind hexagonale bzw. abgerundete hexagonale Plättchenformen.

In einer bevorzugten Ausführungsform beträgt die Länge L bzw. der mittlere Durchmesser D der durch die erste und zweite Raumrichtung gebildeten Ebene das Fünffache bis Dreißigfache der Höhe H. Bevorzugte Abmessungen unterliegen dem folgenden Verhältnis:

> L bzw. D: H 5:1 bis 30:1
>
> Bevorzugte Abmessungen der Plättchen liegen im Bereich von

L bzw. D = 0,1 bis 15 μm und H = 0,01 bis 1 μm.

Die im Verfahren der vorliegenden Erfindung eingesetzten Schichtdoppelhydroxide können desweiteren auch bereits vor dem Aufbringen auf die Oberfläche zu einer Sekundärstruktur in Form von Agglomeraten oder auch Stapeln der Primärstruktur-Partikel ("Plättchenstruktur") verbunden sein. Dabei ist es möglich, dass sämtliche der aufzubringenden Schichtdoppelhydroxide bereits vor dem Aufbringen auf die Oberfläche zu Agglomeraten und/oder Stapeln verbunden sind, bevorzugt jedoch weniger als 95%, weiter bevorzugt weniger als 80%, insbesondere bevorzugt weniger als 65%, ebenfalls bevorzugt weniger als 50% und am meisten bevorzugt weniger als 35%.

In einer weiteren bevorzugten Ausführungsform umfasst die Zusammensetzung gemäß dem Verfahren der vorliegenden Erfindung zudem eine hydrophobe Lösung. Bevorzugte hydrophobe Lösungen sind gemäß der vorliegenden Erfindung auszuwählen aus der Gruppe bestehend aus Lösungen, die mindestens ein thermoplastisches Polymer, eine Fettsäure, ein Tensid, ein natürliches Lipid wie ein Phospholipid, ein Wachs, ein bevorzugt langkettiges Phosphonat oder einen langkettigen OH-, Aldehyd- oder Amin-funktionalisierten Kohlenwasserstoff oder ein funktionalisiertes hydrophobes Silan, oder deren Mischungen als hydrophoben Bestandteil und Wasser und/oder einen Alkohol, bevorzugt Ethanol, überkritisches Kohlendioxid und/oder Ionischen Flüssigkeiten als Lösungsmittel enthalten. Geeignete Tenside sind insbesondere anionische Tenside, wie z. B. Alkylsulfate, Alkylphosphate, Alkylphosphonate und Ethersulfate. Alternativ können auch Mischungen aus anionischen und nichtionischen Tensiden eingesetzt werden.

Schließlich sind auch hydrophobe Polymere geeignet, wie beispielsweise Acrylatpolymere mit Alkylseitenketten.

In der erfindungsgemäßen Ausführungsform sind die Schichtdoppelhydroxide mit einer einfachen oder mehrfachen hydrophoben Beschichtung versehen. Die Beschichtung umfasst in einer besonders bevorzugten Ausführungsform der vorliegenden Erfindung mindestens ein thermoplastisches Polymer, eine Fettsäure, ein Tensid, ein Wachs, bevorzugt ein oxidiertes Paraffinwachs, ein Montanwachs und/-oder ein Amid-Wachs, ein langkettiges Phosphonat, einen langkettigen OH-, Aldehyd- oder Amin-funktionalisierten Kohlenwasserstoff, ein langkettiges Keton, ein langkettiges Aldehyd und/oder ein langkettiges Amid oder ein funktionalisiertes Silan oder deren Mischungen, wobei im Fall einer mehrfachen Beschichtung jede Schicht unterschiedliche hydrophobe Bestandteile umfassen kann und es ebenfalls möglich ist, dass eine Schicht einen einzigen hydrophoben Bestandteil umfasst, währenddessen eine zweite (oder dritte usw.) Schicht zwei oder mehr hydrophobe Bestandteile umfasst. Geeignete Tenside sind insbesondere anionische Tenside, wie z. B. Alkylsulfate, Alkylphosphate, Alkylphosphonate und Ethersulfate. Alternativ können auch Mischungen aus anionischen und nichtionischen Tensiden eingesetzt werden. Schließlich sind auch hydrophobe Polymere geeignet, wie beispielsweise Acrylatpolymere mit Alkylseitenketten.

Die hydrophobe Beschichtung kann in jeder dem Fachmann als geeignet bekannten Weise auf die Schichtdoppelhydroxide aufgebracht werden. In bevorzugter Weise wird die hydrophobe Beschichtung auf die Schichtdoppelhydroxide aufgebracht, indem diese zusammen mit einem oder mehreren hydrophoben Bestandteilen, wie beispielsweise einer Fettsäure, einem Wachs, bevorzugt einem oxidierten Paraffinwachs, einem Montanwachs und oder einem Amid-Wachs, einem Phosphonat oder einem Tensid, vermahlen oder in micronisierter Form aufgetragen werden.

Es ist im Rahmen der vorliegenden Erfindung daher grundsätzlich möglich, dass die Schichtdoppelhydroxide bereits in hydrophob-beschichteter Form in die Zusammensetzung eingebracht werden.

Die Schichtdoppelhydroxide können jedoch auch ohne hydrophobe Beschichtung in die Zusammensetzung eingebracht werden. Enthält die Zusammensetzung in einer bevorzugten Ausführungsform noch eine hydrophobe Lösung, so ist es besonders bevorzugt, wenn die Schichtdoppelhydroxide durch die hydrophoben Bestandteile der hydrophoben Lösung mit einer hydrophoben Beschichtung versehen werden. Sofern bereits hydrophob beschichtete Schichtdoppelhydroxide eingesetzt werden, so ist es besonders vorteilhaft, wenn diese durch den gleichzeitigen Einsatz einer hydrophoben Lösung bei Herstellen der Zusammensetzung mit einer weiteren hydrophoben Schicht versehen werden.

Gemäß dem Verfahren der vorliegenden Erfindung ist es bevorzugt, die Zusammensetzung wie sie vorstehend näher definiert wurde durch Sprühen, Tauchen, Rakeln, Aufschmelzen, Sublimieren oder Spincoaten auf eine feste Oberfläche aufzubringen. Grundsätzlich kann die Zusammensetzung jedoch auf jede dem Fachmann als geeignet bekannte Weise auf die feste Oberfläche aufgebracht werden.

Bei der festen Oberfläche kann es sich um jedes Material handeln, das dem Fachmann als geeignet bekannt ist, besonders gut eignet sich jedoch das erfindungsgemäße Verfahren für Oberflächen aus Glas, Holz, Metall, Kunststoff, Keramik oder eine mineralische Oberfläche beispielsweise in Form von Gebäudeinnen- oder -außenseiten.

Das Aufbringen der Zusammensetzung gemäß der vorliegenden Erfindung erfolgt bevorzugt bei einer Temperatur von 0 - 150°C, weiter bevorzugt 11 - 120 °C, insbesondere bevorzugt 15 - 100 °C, bevorzugter 18 - 50 °C, am meisten bevorzugt 19 - 30 °C. In einem weiteren Aspekt betrifft die vorliegende Erfindung eine hydrophobe Oberfläche umfassend mindestens ein Schichtdoppelhydroxid, wobei das mindestens eine Schichtdoppelhydroxid mit mindestens einer hydrophoben Beschichtung versehen ist, und wobei die hydrophobe Oberfläche einen Kontaktwinkel von 100 bis 175° aufweist.

Bevorzugt umfasst die hydrophobe Oberfläche gemäß der vorliegenden Erfindung ein Schichtdoppelhydroxid

wie es vorstehend für das erfindungsgemäße Verfahren definiert wurde, besonders bevorzugt handelt es sich bei dem mindestens einen Schichtdoppelhydroxid um mindestens einen Hydrotalcit, wobei Hydrotalcite, wie sie vorstehend definiert wurden, besonders bevorzugt sind.

In einer bevorzugten Ausführungsform ist das mindestens eine Schichtdoppelhydroxid mit mindestens einer hydrophoben Beschichtung versehen, umfassend mindestens ein thermoplasticsches Polymer, eine Fettsäure, ein Tensid, ein Wachs, bevorzugt ein oxidiertes Paraffinwachs, ein Montanwachs, ein Carnaubawachs, Bienenwachs, ein Amid-Wachs, ein langkettiges Phosphonat oder einen langkettigen OH-, Aldehyd- oder Amin-funktionalisierten Kohlenwasserstoff oder deren Mischungen. In besonders bevorzugten Ausführungsformen ist die Beschichtung wie vorstehend definiert ausgebildet.

In einer weiteren bevorzugten Ausführungsform liegt das Schichtdoppelhydroxid auf der festen Oberfläche in Partikeln mit einer Primärstruktur in Form einer Plättchenstruktur vor, wobei der Begriff "Plättchenstruktur" wie vorstehend definiert auszulegen ist.

In einer besonders bevorzugten Ausführungsform besitzen die Plättchen Abmessungen von
L bzw. D = 5 bis 15 $\mu$m und H = 0,01 bis 1,5 $\mu$m.

In einer weiteren bevorzugten Ausführungsform liegt das Schichtdoppelhydroxid auf der festen Oberfläche in Form einer Sekundärstruktur in Form von Agglomeraten und/oder Stapeln der Primärpartikel vor.

In einer weiteren besonders bevorzugten Ausführungsform weist die hydrophobe Oberfläche einen Kontaktwinkel von 140 bis 160° und am meisten bevorzugt einen Kontaktwinkel von 150° auf.

Der Begriff des "Kontaktwinkels" von Flüssigkeiten auf Oberflächen, wie er auch im Rahmen der vorliegenden Erfindung verwendet wird, ist beispielsweise in Physical Chemistry of Surfaces, Chapter X, A. W. Adamson, A. P. Gast, John Wiley & Sons, Inc., 1997, beschrieben. Ein Verfahren zur Messung des Kontaktwinkels, wie es im Rahmen der vorliegenden Erfindung verwendet wird, ist nachfolgend beschrieben.

In einem weiteren Aspekt betrifft die vorliegende Erfindung eine hydrophobe Oberfläche, die nach dem erfindungsgemäßen Verfahren, wie es vorstehend näher definiert wurde, hergestellt wurde.

## Methoden

Teilchengrößenbestimmung mittels Laserdiffraktion (Malvern):

Es wurde ein Mastersizer 2000 der Firma Malvern Instruments Ltd, UK, entsprechend der Angaben des Herstellers eingesetzt. Die Messungen wurden in Ethanol mit einem Hydrotalcitgehalt von 5 Gew % durchgeführt und die auf das Probenvolumen bezogenen Werte (wie die durchschnittliche Teilchengröße D50) ermittelt. Zur vollständigen Dispergierung der Proben wurden die Dispersion des Hydrotalcits in Ethanol vor der Messung außerdem 5 min mit Ultraschall behandelt.

Der D90-Wert gibt den Wert an, bei dem 90% der Teilchen in der gemessenen Probe einen kleineren oder gleichen Teilchendurchmesser aufweisen. Entsprechend geben der D100-Wert, der D50-Wert bzw. der D10-Wert den Wert an, bei dem 100%, 50% bzw. 10% der Teilchen in der gemessenen Probe einen kleineren oder gleichen Teilchendurchmesser aufweisen.

Bestimmung des Schüttgewichts:

Ein bei der 100 ml Markierung abgeschnittener Messzylinder wird gewogen. Dann wird die zu untersuchende Probe mittels eines Pulvertrichters so in einem Zug in den Messzylinder eingefüllt, dass sich oberhalb des Abschlusses des Messzylinders ein Schüttkegel ausbildet. Der Schüttkegel wird mit Hilfe eines Lineals, das über die Öffnung des Messzylinders geführt wird, abgestreift und der gefüllte Messzylinder erneut gewogen. Die Differenz entspricht dem Schüttgewicht.

Wassergehalt:

Der Wassergehalt der Produkte bei 120°C wurde unter Verwendung der Methode DIN/ISO 787/2 ermittelt.

Messung des Kontaktwinkels:

Zur Messung des Kontaktwinkels der unterschiedlichen hergestellten Beschichtungen wurde ein Krüss DSA 100 Kontaktwinkelmessgerät der Firma Krüss, Hamburg, verwendet. Die Grundlage für die Bestimmung des Kontaktwinkels ist das Bild des Tropfens auf der Oberfläche eines ebenen Festkörpers. Zunächst wird durch eine Kanüle mit 1,8mm Durchmesser ein Wassertropfen auf der gewünschten Oberfläche abgesetzt. Mit Hilfe des "Circle-Fitting-Auswertungsverfahrens" der Software "Drop Shape Analysis 1.8" kann durch Anlegen einer Basislinie zwischen Oberfläche

und Tropfenkontur der resultierende Kontaktwinkel bestimmt werden.

Elementaranalyse:

Diese Analyse beruht auf dem Totalaufschluss des Schichtdoppel-hydroxids bzw. des entsprechenden Produkts in Salzsäure. Nach dem Auflösen der Feststoffe werden die Einzelkomponenten mit spezifischen Analysemethoden, wie beispielsweise ICP, analysiert und quantifiziert.

pH-Wert-Bestimmung:

Der pH-Wert wird mit einem pH-Meter in einer wässrigen/ethanolischen Suspension bestimmt. Dazu wird eine 1:1-Mischung aus Wasser und Ethanol (95 %) hergestellt. In einem Gefäß werden 50 g der Wasser/Ethanol-Mischung auf 0,1 g genau eingewogen. 1 g Schichtdoppelhydroxid wird auf 1 mg genau eingewogen und anschließend quantitativ in das Becherglas mit der Ethanol/Wasser-Mischung überführt. Es wird dann 5 min gerührt und anschließend der pH-Wert am Instrument abgelesen.

Es wurden die nachstehenden Hydrotalcite als Ausgangsmaterial verwendet, wobei die jeweilige kommerzielle Bezugsquelle angegeben ist bzw. die Herstellung entsprechender Schichtdoppelhydroxide auch nach dem Fachmann geläufigen Verfahren (siehe oben) leicht möglich ist.

BET-Oberfläche/Porenvolumen nach BJH und BET:

Die Oberfläche wurde mit einem vollautomatischen Stickstoffporosimeter der Firma Micromeritics Typ ASAP 2010 bestimmt.

Die Probe wird im Hochvakuum auf die Temperatur von flüssigem Stickstoff abgekühlt. Anschließend wird kontinuierlich Stickstoff in die Probenkammern dosiert. Durch die Erfassung der adsorbierten Gasmenge als Funktion des Druckes wird bei konstanter Temperatur eine Adsorptionsisotherme ermittelt. In einem Druckausgleich wird das Analysengas schrittweise entfernt und eine Desorptionsisotherme aufgenommen.

Zur Ermittlung der spezifischen Oberfläche und der Porosität nach der BIT-Theorie werden die Daten gemäß DIN 66131 ausgewertet.

Eingesetzte Hydrotalcite:

Als Hydrotalcite werden die Süd-Chemie-Materialien Sorbacid® 911 und Sorbacid® 944 eingesetzt. Deren charakteristische Daten sind in der folgenden Tabelle aufgeführt.

Tabelle 1: Eigenschaften der eingesetzten Hydrotalcite

| | Sorbacid® 911 | Sorbacid® 944 |
|---|---|---|
| Typ | Mg-Al-Hydroxycarbonat | Mg-Al-Zn-Hydroxycarbonat |
| Chemische Analyse | | |
| Al | 9 - 12 % | 8 - 13 % |
| Mg | 20 - 24 % | 12 - 18 % |
| Zn | -- | 9 - 13 % |
| Physikalische Analyse | | |
| pH (5 %ige Suspension, EtOH) | 7,0 - 9,5 | ≤ 9,5 |
| Feuchte (105 °C, 2 h) | ≤ 0,5 % | ≤ 0,5 % |
| BET-Oberfläche | ≤ 15 $m^2$/g | ≤ 15 $m^2$/g |
| Korngrößenverteilung (volumetrisch)<br>D50<br>D90 | <br>≤ 1 µm<br>≤ 10 µm | <br>≤ 1 µm<br>≤ 10 µm |

REM-Messung:

Durch Sputtern der hergestellten hydrophoben Oberflächen werden die Proben für die REM-Aufnahmen vorbereitet. Dabei wird mit einer Sputteranlage (EMITECH K 550) eine Beschichtung aus 80% Gold und 20% Palladium bei einer Stromstärke von 15 mA bei 0,15 mbar in 1,5 min bei einer Belegungsrate von 13 nm/min auf die Oberfläche aufgebracht.

Die so vorbereiteten hydrophoben Oberflächen werden in einem REM-Gerät des Fabrikats ESEM Quanta 400 FEG vermessen.

Sputteranlage:

EMITECH K 550, Fa. Emitech, England
Abstand Objekttisch-Target: 25 mm
Sputterzeit: 1,5 min
Stromstärke: 15 mA bei 0,15 mbar
Schichtdicke (Deposition): ca 13 nm/min
Target: Gold/Palladium 80%/20%

ESEM Quanta 400 FEG:

Fa. FEI, Tschechien
Schottky-Emitter Kathodensystem
Everhart-Thornley-Detektor
Halbleiterrückstreuelektronendetektor
Auflösung: 2,0 nm bei 30 keV
Vergrößerung: bis zu 1.000.000x

**Figuren und Beispiele**

Das erfindungsgemäße Verfahren wird nachstehend anhand der beschriebenen Figuren und Beispiele näher beschrieben. Es soll hierbei betont werden, dass sowohl die Figuren wie auch die Beispiele lediglich veranschaulichenden Charakter besitzen und in keinster Weise den Rahmen der Erfindung beschränken.

Es zeigt:

Fig.1: Eine Rasterelektronenmikroskop-Aufnahme einer erfindungsgemäßen beschichteten Oberfläche mit dem Produkt Sorbacid 944

Fig.2: Eine Rasterelektronenmikroskop-Aufnahme einer erfindungsgemäßen beschichteten Oberfläche mit dem Produkt Sorbacid 911

Fig.3: Eine Rasterelektronenmikroskop-Aufnahme einer erfindungsgemäßen beschichteten Oberfläche mit dem Produkt Sorbacid 944

Fig.4: Eine Rasterelektronenmikroskop-Aufnahme einer erfindungsgemäßen beschichteten Oberfläche mit dem Produkt Sorbacid 911

Fig.5: Eine schematische Darstellung eines erfindungsgemäßen Schichtdoppelhydroxid-Primärpartikels in Plättchenstruktur in einen Quader eingebracht. Figur 5 dient der Verdeutlichung der Definition des Begriffs "Plättchenstruktur"

Beispiel 1

1g Sorbacid® 911 sowie Sorbacid® 944 (Süd-Chemie AG, Moosburg) wurden jeweils in 9 g Aceton (Fa. Carl Roth Aceton > 99,5 % zur Synthese) eingewogen und mit einem Magnetrührstab für 2 Minuten suspendiert und dispergiert und auf einen Objektträger aufgebracht (Standard Objektträger der Firma Roth). Dabei wurde die Dispersion so auf den Objektträger aufgebracht, dass die Oberfläche homogen von der Suspension bedeckt war. Die anschließende Trocknung erfolgte für 15 min bei 20 °C im Luftstrom eines Laborabzugs. Nach Verdampfen des Acetons wurde eine trübe, weiße Beschichtung erhalten. Die Messungen des Kontaktwinkels sind in Tabelle 1 dargestellt. Zum Vergleich wurde Tegotop® 210 auf den Glasobjektträger beschichtet (Trocknungszeit ca. 4 h bei 70 °C). Tegotop® 210 ist ein System bestehend

aus einem Siliconpolymer und hydrophobem Silica. Zum Vergleich wurden noch Kontaktwinkelmessungen mit unbehandelten Glasobjektträgern durchgeführt sowie Glasobjektträgern, die mit Stearinsäure aus einer 20 %igen Stearinsäureethanollösung beschichtet wurden.

Tabelle 1: Kontaktwinkelangaben

| Beschichtungssystem | Kontaktwinkel [°] |
|---|---|
| Sorbacid® 911 | 150° |
| Sorbacid® 944 | 146° |
| Tegotop® 210 | 140° |
| Stearinsäure | 86° |
| Unbehandelter Objektträger | 42° |
| (Vergleichsmessung) | |

Die Daten bestätigen eine universelle Verwendbarkeit erfindungsgemäßer, hydrophober Schichtdoppelhydroxide auf festen Oberflächen und zeigen, dass diese besonders vorteilhaft zur Herstellung von Schmutz abweisenden Beschichtungen mit hohem Kontaktwinkel einsetzbar sind.

Die in den Figuren gezeigten rasterelektronenmikroskopischen zu den Beschichtungen zeigen eine strukturierte Bedeckung der Glasträger mit Hydrotalcit-Partikeln, wobei die Abstände der Erhebungen ähnlich den mittleren Breite der Erhebungen ist. Dies ist eine Hauptbedingung zur Einstellung von superhydrophoben Oberflächen (siehe Hierzu: R. Fürstner, W. Barlhlott, C. Niehuis, P. Walzel, Wetting and Self-Cleaning Properties of Artificial Superhydrophobic Surfaces, Langmuir 2005, 21, 956-961). Die gemessenen hohen Kontaktwinkel sind somit in Einklang mit der Struktur der Beschichtungen.

Beispiel 2

In einem 250 ml Becherglas wurden 21,5 g Sorbacid 911, 7,1 g Buntlack (OBI CLASSIC Buntlack auf Acryl-Basis - wasserverdünnbar) und 35,7 g Stoddard Solvent (Acros Organics) bei 90°C erwärmt und durch Rühren homogenisiert. Dann wurden 35,7 g Wasser der Temperatur von 90 °C zugegeben und weiter gerührt, bis eine homogene Suspension entstand. Die Suspension wurde nach dem Abkühlen auf Oberflächen aufgetragen. Die Trocknung bei 20 °C im Luftstrom eines Laborabzugs erfolgte aufgrund des hochsiedenden Stoddard-Solvents für 5 Stunden. Nach dem Trocknen erhielt man eine mechanisch belastbare, hydrophobe Oberfläche. Diese wies einen Kontaktwinkel für Wasser von 143 ° auf. Die nur mit dem Acryllack beschichtete Oberfläche wies lediglich einen Kontaktwinkel von 84 ° auf.

## Patentansprüche

**1.** Verfahren zur Herstellung einer hydrophoben Oberfläche umfassend die Schritte:

- Herstellen einer Zusammensetzung enthaltend mindestens ein Schichtdoppelhydroxid;
- Aufbringen der Zusammensetzung auf eine Oberfläche, wobei das mindestens eine Schichtdoppelhydroxid mit mindestens einer hydrophoben Beschichtung versehen ist, und wobei die hydrophobe Oberfläche einen Kontaktwinkel von 100 bis 175° aufweist.

**2.** Verfahren nach Anspruch 1, wobei es sich bei der Zusammensetzung um eine Dispersion, eine Matrix, insbesondere eine polymere Matrix oder eine ein Wachs umfassende Matrix, oder einen Lack handelt.

**3.** Verfahren nach Anspruch 2, wobei es sich bei der Dispersion um eine Dispersion umfassend Wasser, Alkohol, Ketone, aliphatische und aromatische Lösemittel sowie Mischungen aus den vorher angeführten Lösemitteln, überkritischem Kohlendioxid, ionischen Flüssigkeiten und deren Mischungen handelt.

**4.** Verfahren nach Anspruch 2, wobei es sich bei der Matrix um eine polymere Matrix umfassend mindestens ein Polymer ausgewählt aus der Reihe thermoplastischer Polymere oder um eine ein Wachs umfassende Matrix umfassend mindestens ein Wachs ausgewählt aus der Reihe unoxidierter, oxidierter oder teiloxidierter Paraffinwachse, Montanwachse, Amid-Wachse, Carnaubawachs, Bienenwachs oder deren Mischungen handelt.

**5.** Verfahren nach einem der vorhergehenden Ansprüche, wobei es sich bei dem mindestens einen Schichtdoppelhydroxid um mindestens einen Hydrotalcit handelt.

**6.** Verfahren nach Anspruch 5, wobei der mindestens eine Hydrotalcit ausgewählt ist aus Aluminium-Magnesium-Hydroxycarbonat enthaltend 9-12 % Al und 20-24 % Mg sowie Aluminium-Magnesium-Zink-Hydroxycarbonat enthaltend 8-13 % Al, 12-18 % Mg und 9-13 % Zn.

**7.** Verfahren nach einem der vorhergehenden Ansprüche, wobei das mindestens eine Schichtdoppelhydroxid in Form von Partikeln mit einer Plättchenstruktur vorliegt.

**8.** Verfahren nach Anspruch 7, wobei die Plättchen Abmessungen von L bzw. D = 0,1 bis 15 μm und H = 0,01 bis 1 μm besitzen.

**9.** Verfahren nach einem der vorhergehenden Ansprüche, wobei die Zusammensetzung desweiteren eine hydrophobe Lösung enthält.

**10.** Verfahren nach Anspruch 9, wobei die hydrophobe Lösung mindestens ein thermoplastisches Polymer, eine Fettsäure, ein Tensid, ein natürliches Lipid wie ein Phospholipid, ein Wachs, ein langkettiges Phosphonat oder einen langkettigen OH-, Aldehyd- oder Amin-funktionalisierten Kohlenwasserstoff oder ein funktionalisiertes hydrophobes Silan, oder deren Mischungen umfasst.

**11.** Verfahren nach einem der vorhergehenden Ansprüche, wobei es sich bei der hydrophoben Beschichtung um eine Beschichtung umfassend ein thermoplastisches Polymer, eine Fettsäure, ein Tensid, ein Wachs, ein langkettiges Phosphonat oder einen langkettigen OH-, Aldehyd- oder Amin-funktionalisierten Kohlenwasserstoff oder deren Mischungen handelt.

**12.** Verfahren nach einem der vorhergehenden Ansprüche, wobei die Zusammensetzung durch Sprühen, Tauchen, Aufschmelzen, Spincoaten, Sublimieren auf die Oberfläche aufgebracht wird.

**13.** Verfahren nach einem der vorhergehenden Ansprüche, wobei die Zusammensetzung bei einer Temperatur von 0-150 °C auf die Oberfläche aufgebracht wird.

**14.** Verfahren nach einem der vorhergehenden Ansprüche, wobei sich bei der Oberfläche um eine Glasoberfläche, eine Metalloberfläche, eine Kunststoffoberfläche, eine Holzoberfläche, eine Keramikoberfläche, eine mineralische Oberfläche beispielsweise in Form von Gebäudeinnen- oder Gebäudeaußenseiten handelt.

**15.** Hydrophobe Oberfläche umfassend mindestens ein Schichtdoppelhydroxid, wobei das mindestens eine Schichtdoppelhydroxid mit mindestens einer hydrophoben Beschichtung versehen ist, und wobei die hydrophobe Oberfläche einen Kontaktwinkel von 100 bis 175° aufweist.

**16.** Hydrophobe Oberfläche nach Anspruch 15, wobei es sich bei dem mindestens einen Schichtdoppelhydroxid um mindestens einen Hydrotalcit handelt.

**17.** Hydrophobe Oberfläche nach einem der Ansprüche 15 oder 16, wobei das mindestens eine Schichtdoppelhydroxid mindestens eine Beschichtung umfassend mindestens ein thermoplastisches Polymer, eine Fettsäure, ein Tensid, ein Wachs, ein langkettiges Phosphonat oder einen langkettigen OH-, Aldehyd- oder Amin-funktionalisierten Kohlenwasserstoff oder deren Mischungen aufweist.

**18.** Hydrophobe Oberfläche nach einem der Ansprüche 15 bis 17, wobei das mindestens eine Schichtdoppelhydroxid eine Plättchenstruktur besitzt.

**19.** Hydrophobe Oberfläche nach Anspruch 18, wobei die Plättchen Abmessungen von L bzw. D = 5 bis 15 μm und H = 0,01 bis 1,5 μm besitzen.

**20.** Hydrophobe Oberfläche nach Anspruch 15, wobei die hydrophobe Oberfläche einen Kontaktwinkel von 140 bis 160° aufweist.

**21.** Hydrophobe Oberfläche hergestellt nach einem Verfahren gemäß einem der Ansprüche 1 bis 14.

## Claims

1. Method for producing a hydrophobic surface, said method comprising the steps of:

   - preparing a composition comprising at least one layered double hydroxide, and
   - applying the composition to a surface,

   wherein the at least one layered double hydroxide is provided at least one hydrophobic coating, and wherein the hydrophobic surface has a contact angle of 100 to 175°.

2. Method according to Claim 1, wherein the composition comprises a dispersion, a matrix, in particular a polymeric matrix or a matrix comprising a wax, or a varnish.

3. Method according to Claim 2, wherein the dispersion comprises a dispersion comprising water, alcohol, ketones, aliphatic and aromatic solvents and also mixtures thereof, supercritical carbon dioxide, ionic liquids and mixtures thereof.

4. Method according to Claim 2, wherein the matrix comprises a polymeric matrix comprising at least one polymer selected from the series of thermoplastic polymers or a matrix comprising a wax that comprises at least one wax selected from the series of fully oxidized, partially oxidized or unoxidized paraffin waxes, montan waxes, amide waxes, carnauba wax, beeswax or mixtures thereof.

5. Method according to any preceding claim, wherein the at least one layered double hydroxide comprises at least one hydrotalcite.

6. Method according to Claim 5, wherein the at least one hydrotalcite is selected from aluminium-magnesium hydroxycarbonate comprising 9-12% Al and 20-24% Mg and also aluminium-magnesium-zinc hydroxycarbonate comprising 8-13% Al, 12-18% Mg and 9-13% Zn.

7. Method according to any preceding claim, wherein the at least one layered double hydroxide is in the form of particles having a platelet structure.

8. Method according to Claim 7, wherein the platelets have measurements of L or D = 0.1 to 15 $\mu$m and H = 0.01 to 1 $\mu$m.

9. Method according to any preceding claim, wherein the composition further comprises a hydrophobic solution.

10. Method according to Claim 9, wherein the hydrophobic solution comprises one or more than one thermoplastic polymer, fatty acid, surfactant, natural lipid such as phospholipid, wax, long-chain phosphonate or long-chain HO-, aldehyde- or amine-functionalized hydrocarbon or functionalized hydrophobic silane, or mixtures thereof.

11. Method according to any preceding claim, wherein the hydrophobic coating comprises a coating comprising a thermoplastic polymer, a fatty acid, a surfactant, a long-chain phosphonate or a long-chain HO-, aldehyde- or amine-functionalized hydrocarbon or mixtures thereof.

12. Method according to any preceding claim, wherein the composition is applied to the surface by spraying, dipping, melting, spincoating, sublimation.

13. Method according to any preceding claim, wherein the composition is applied to the surface at a temperature of 0-150°C.

14. Method according to any preceding claim, wherein the surface comprises a glass surface, a metal surface, a plastics surface, a wood surface, a ceramic surface, a mineral surface for example in the form of building inside or outside surfaces.

15. Hydrophobic surface comprising at least one layered double hydroxide, wherein the at least one layered double hydroxide is provided at least one hydrophobic coating, and wherein the hydrophobic surface has a contact angle of 100 to 175°.

**16.** Hydrophobic surface according to Claim 15, wherein the at least one layered double hydroxide comprises at least one hydrotalcite.

**17.** Hydrophobic surface according to either of Claims 15 and 16, wherein the at least one layered double hydroxide has at least one coating comprising one or more than one thermoplastic polymer, fatty acid, surfactant, wax, long-chain phosphonate or long-chain HO-, aldehyde- or amine-functionalized hydrocarbon or mixtures thereof.

**18.** Hydrophobic surface according to any of Claims 15 to 17, wherein the at least one layered double hydroxide has a platelet structure.

**19.** Hydrophobic surface according to Claim 18, wherein the platelets have measurements of L and/or D = 5 to 15 μm and H = 0.01 to 1.5 μm.

**20.** Hydrophobic surface according to Claim 15, wherein the hydrophobic surface has a contact angle of 140 to 160°.

**21.** Hydrophobic surface obtained by a method according to any of Claims 1 to 14.

## Revendications

**1.** Procédé de fabrication d'une surface hydrophobe, comprenant les étapes suivantes :

- la fabrication d'une composition contenant au moins un hydroxyde double couche ;
- l'application de la composition sur une surface, dans lequel ledit au moins un hydroxyde double couche est muni d'au moins un revêtement hydrophobe, et dans lequel la surface hydrophobe présente un angle de contact de 100 à 175°.

**2.** Procédé selon la revendication 1, dans lequel la composition est une dispersion, une matrice, notamment une matrice polymère ou une matrice comprenant une cire, ou un vernis.

**3.** Procédé selon la revendication 2, dans lequel la dispersion est une dispersion comprenant de l'eau, un alcool, des cétones, des solvants aliphatiques et aromatiques, ainsi que des mélanges des solvants listés précédemment, du dioxyde de carbone supercritique, des liquides ioniques et leurs mélanges.

**4.** Procédé selon la revendication 2, dans lequel la matrice est une matrice polymère comprenant au moins un polymère choisi dans la série constituée par les polymères thermoplastiques, ou une matrice comprenant une cire, comprenant au moins une cire choisie dans la série constituée par les cires paraffiniques non oxydées, oxydées ou partiellement oxydées, les cires de lignite, les cires d'amides, la cire de carnauba, la cire d'abeilles ou leurs mélanges.

**5.** Procédé selon l'une quelconque des revendications précédentes, dans lequel ledit au moins un hydroxyde double couche est au moins un hydrotalcite.

**6.** Procédé selon la revendication 5, dans lequel ledit au moins un hydrotalcite est choisi parmi l'hydroxycarbonate d'aluminium-magnésium contenant 9 à 12 % d'Al et 20 à 24 % de Mg, et l'hydroxycarbonate d'aluminium-magnésium-zinc contenant 8 à 13 % d'Al, 12 à 18 % de Mg et 9 à 13 % de Zn.

**7.** Procédé selon l'une quelconque des revendications précédentes, dans lequel ledit au moins un hydroxyde double couche se présente sous la forme de particules ayant une structure plaquettaire.

**8.** Procédé selon la revendication 7, dans lequel les plaquettes ont des dimensions de L ou D = 0,1 à 15 μm, et H = 0,01 à 1 μm.

**9.** Procédé selon l'une quelconque des revendications précédentes, dans lequel la composition contient en outre une solution hydrophobe.

**10.** Procédé selon la revendication 9, dans lequel la solution hydrophobe comprend au moins un polymère thermoplastique, un acide gras, un tensioactif, un lipide naturel tel qu'un phospholipide, une cire, un phosphonate à chaîne longue ou un hydrocarbure à fonction OH, aldéhyde ou amine à chaîne longue, ou un silane hydrophobe fonctionnalisé, ou leurs mélanges.

**11.** Procédé selon l'une quelconque des revendications précédentes, dans lequel le revêtement hydrophobe est un revêtement comprenant un polymère thermoplastique, un acide gras, un tensioactif, une cire, un phosphonate à chaîne longue ou un hydrocarbure à fonction OH, aldéhyde ou amine à chaîne longue, ou leurs mélanges.

**12.** Procédé selon l'une quelconque des revendications précédentes, dans lequel la composition est appliquée sur la surface par pulvérisation, immersion, fusion, dépôt à la tournette, sublimation.

**13.** Procédé selon l'une quelconque des revendications précédentes, dans lequel la composition est appliquée sur la surface à une température de 0 à 150 °C.

**14.** Procédé selon l'une quelconque des revendications précédentes, dans lequel la surface est une surface en verre, une surface en métal, une surface en plastique, une surface en bois, une surface en céramique, une surface minérale, par exemple sous la forme de côtés intérieurs ou extérieurs de bâtiments.

**15.** Surface hydrophobe comprenant au moins un hydroxyde double couche, dans laquelle ledit au moins un hydroxyde double couche est muni d'au moins un revêtement hydrophobe, et dans laquelle la surface hydrophobe présente un angle de contact de 100 à 175°.

**16.** Surface hydrophobe selon la revendication 15, dans laquelle ledit au moins un hydroxyde double couche est au moins un hydrotalcite.

**17.** Surface hydrophobe selon l'une quelconque des revendications 15 ou 16, dans laquelle ledit au moins un hydroxyde double couche comprend au moins un revêtement comprenant au moins un polymère thermoplastique, un acide gras, un tensioactif, une cire, un phosphonate à chaîne longue ou un hydrocarbure à fonction OH, aldéhyde ou amine à chaîne longue, ou leurs mélanges.

**18.** Surface hydrophobe selon l'une quelconque des revendications 15 à 17, dans laquelle ledit au moins un hydroxyde double couche présente une structure plaquettaire.

**19.** Surface hydrophobe selon la revendication 18, dans laquelle les plaquettes ont des dimensions de L ou D = 5 à 15 $\mu$m, et H = 0,01 à 1,5 $\mu$m.

**20.** Surface hydrophobe selon la revendication 15, dans laquelle la surface hydrophobe présente un angle de contact de 140 à 160°.

**21.** Surface hydrophobe fabriquée par un procédé selon l'une quelconque des revendications 1 à 14.

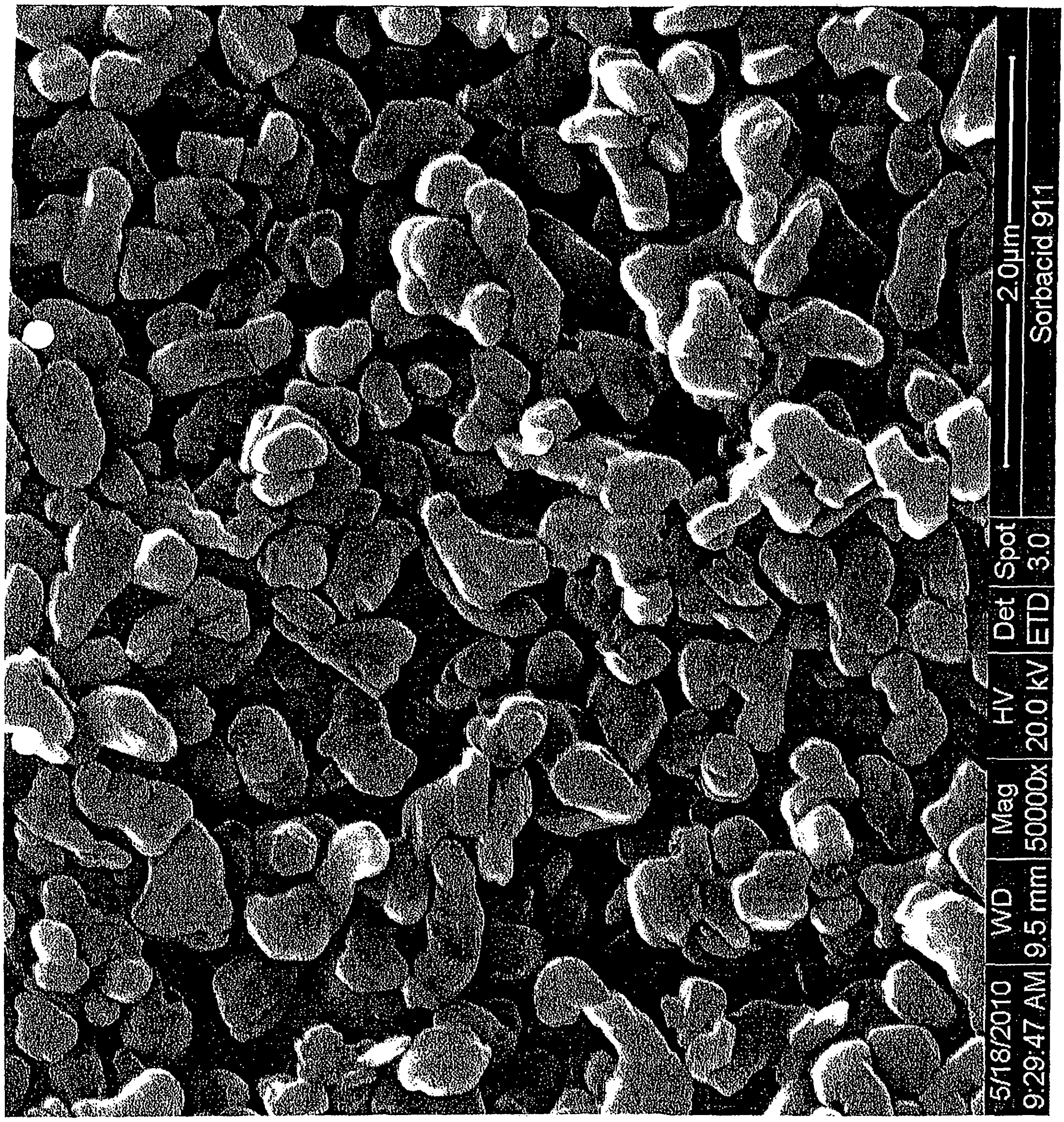
5/18/2010
9:29:47 AM
WD
9.5 mm
Mag
50000x
HV
20.0 kV
Det
ETD
Spot
3.0
2.0µm
Sorbacid 91.1

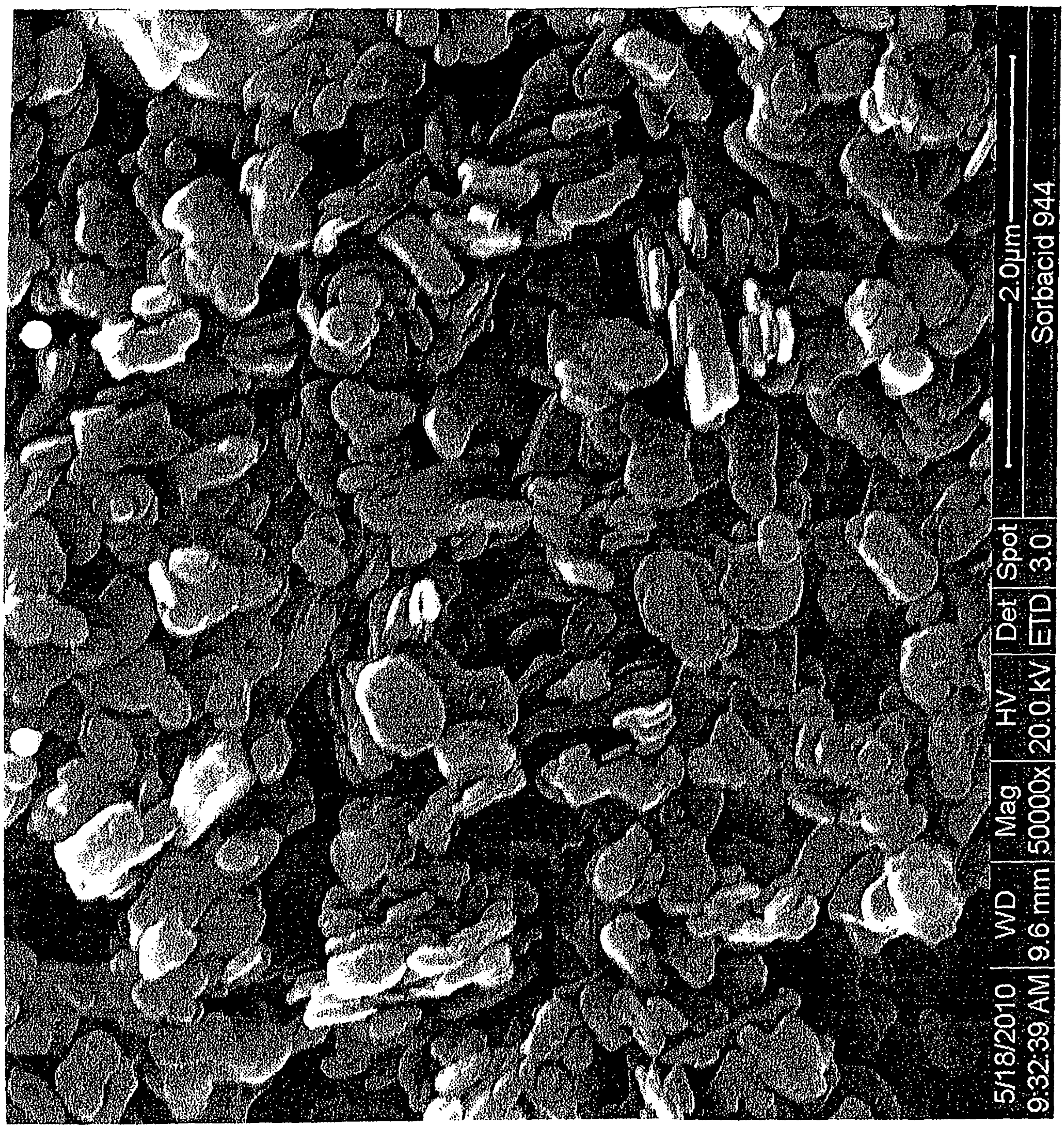
5/18/2010 9:32:39 AM
WD 9.6 mm
Mag 50000x
HV 20.0 kV
Det ETD
Spot 3.0
2.0µm
Sorbacid 944

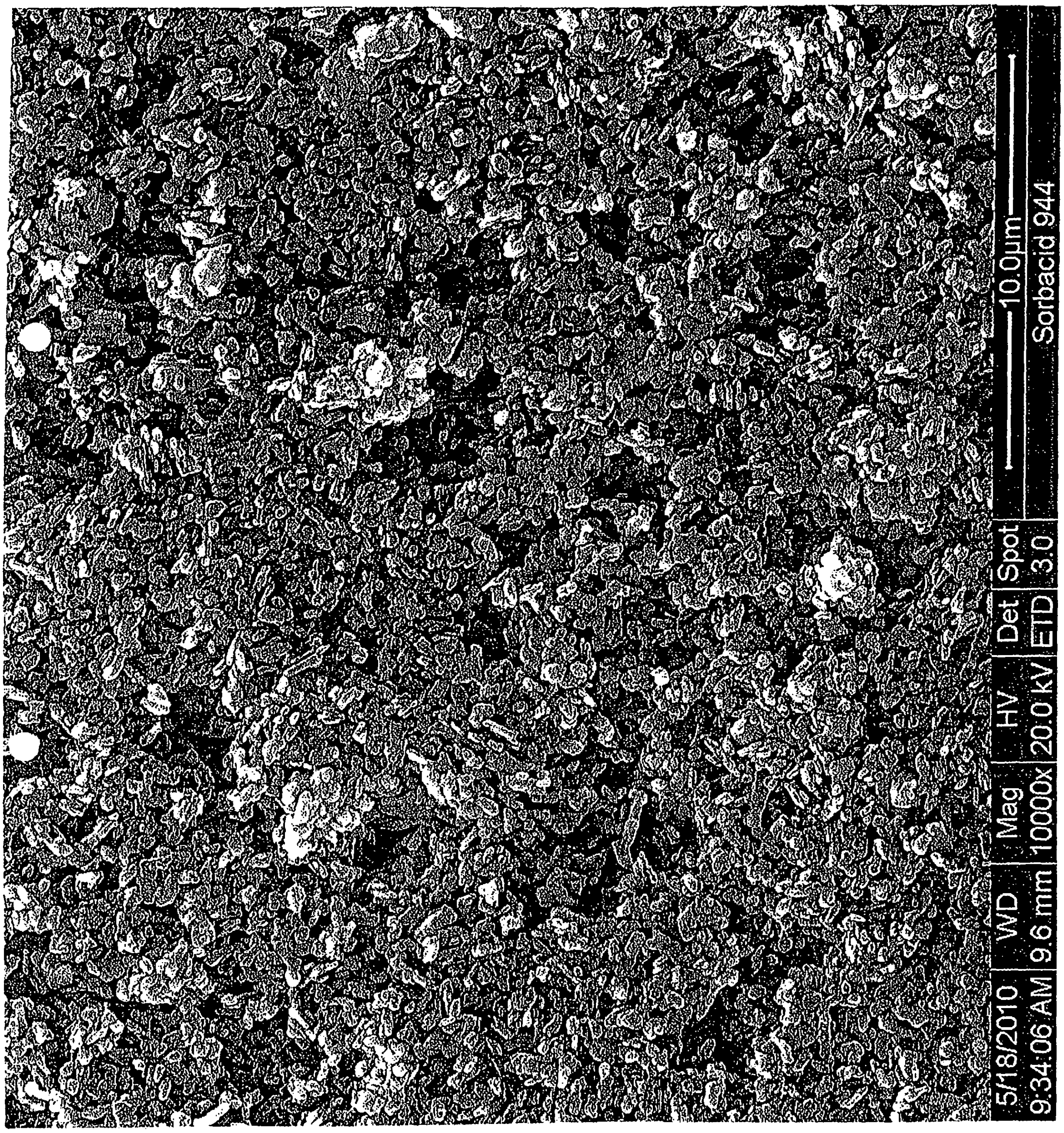
5/18/2010
9:34:06 AM
WD
9.6 mm
Mag
10000x
HV
20.0 kV
Det
ETD
Spot
3.0
10.0µm
Sorbacid 944

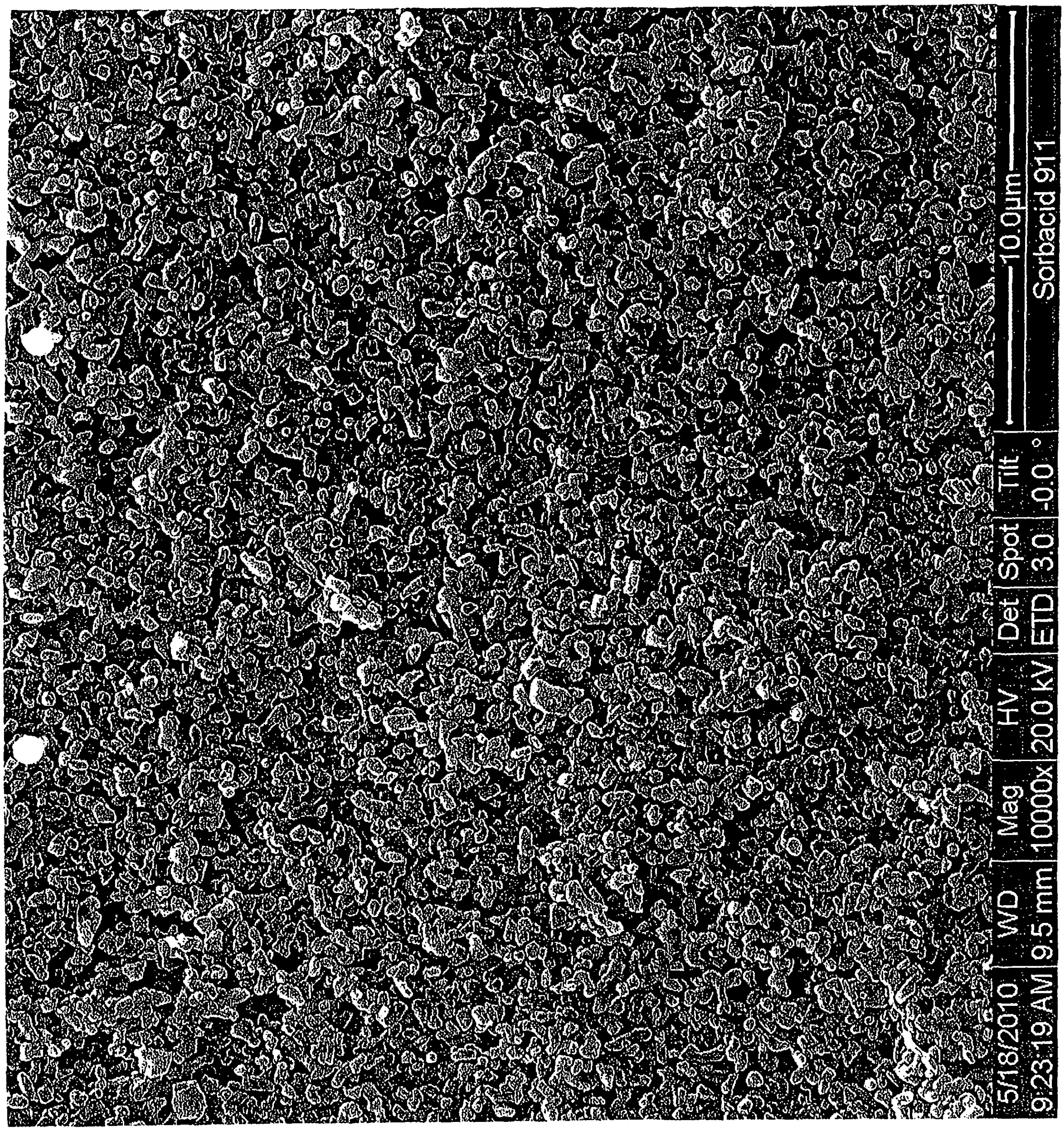
5/18/2010
9:23:19 AM
WD
9.5 mm
Mag
10000x
HV
20.0 kV
Det
ETD
Spot
3.0
Tilt
-0.0 °
10.0µm
Sorbacid 911

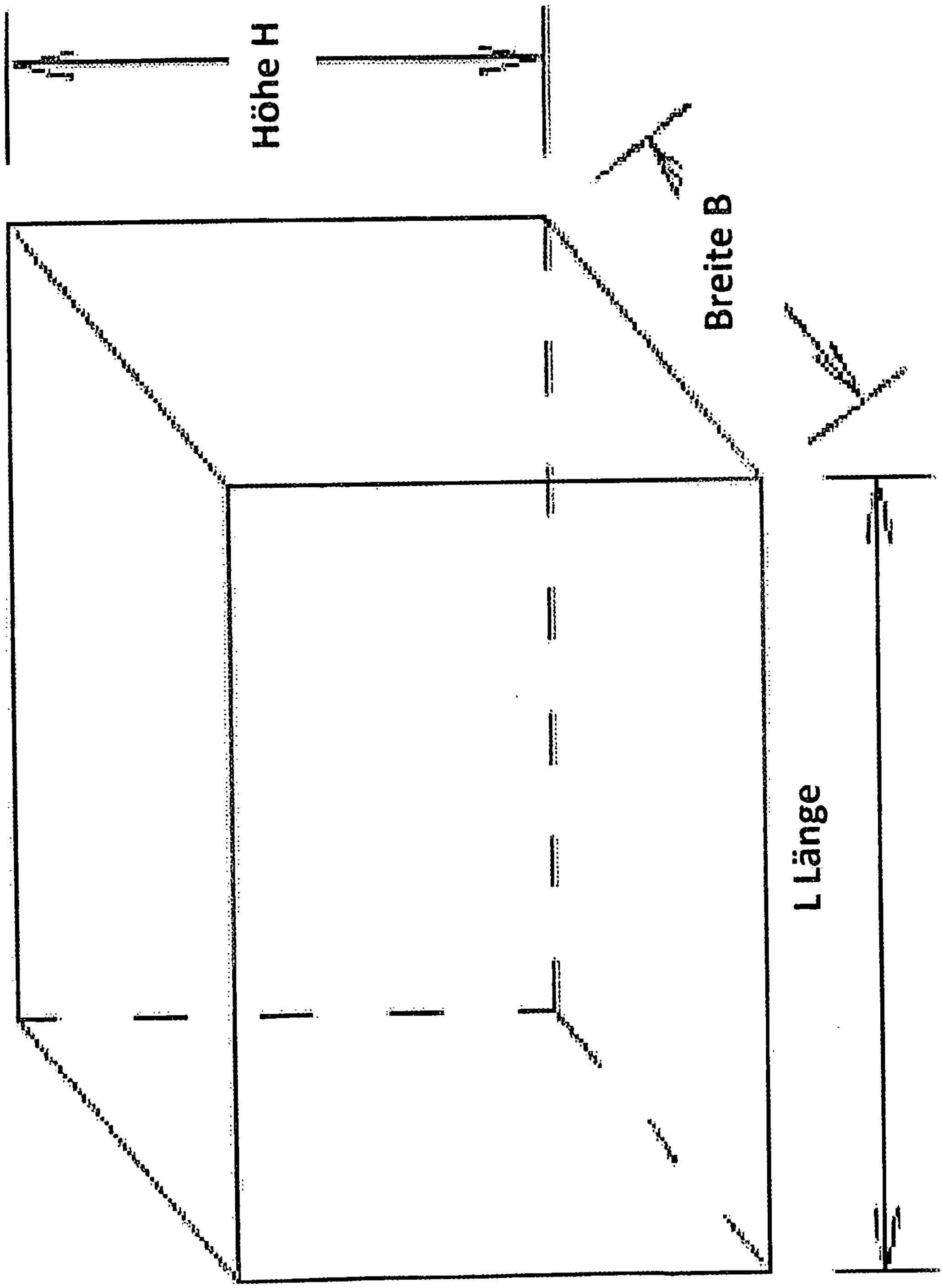
Höhe H
Breite B
L Länge

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 96074123 A
- EP 0933388 A
- CH 268258
- EP 0909747 A
- WO 0058410 A
- DE 102005052404 A1
- WO 2009040596 A
- WO 2005071023 A
- WO 2010139586 A


### In der Beschreibung aufgeführte Nicht-Patentliteratur


- **A. W. ADAMSON ; A. P. GAST.** Physical Chemistry of Surfaces. John Wiley & Sons, Inc, 1997
- **R. FRENZEL et al.** Ultrahydrophobe Oberflächen durch gezieltes Grenzflächendesign. *Chemie Ingenieur Technik,* 2010, vol. 82 (3), 297-308
- Adhesion and friction studies of silicon surfaces processed_using a microparticle-based method. *Autoren Yilei Zhang and Sriram Sundararajan, Tribology Letters,* Juli 2006, vol. 23 (1
- **R. FÜRSTNER ; W. BARLHLOTT ; C. NIEHUIS ; P. WALZEL.** Wetting and Self-Cleaning Properties of Artificial Superhydrophobic Surfaces. *Langmuir,* 2005, vol. 21, 956-961